# EUROPEAN PATENT APPLICATION

(11) **EP 4 160 597 A1**
(43) Date of publication of application: **05.04.2023**
(21) Application number: 21829805.7
(22) Date of filing: 23.06.2021
(51) Int. Cl.: G11B 33/12

(54) **HARD DISK MOUNTING MECHANISM, HARD DISK ASSEMBLY AND ELECTRONIC DEVICE**

(30) Priority: 24.06.2020 CN 202010590820
(71) Applicant: Huawei Technologies Co., Ltd., Longgang District, Shenzhen, Guangdong 518129 (CN)
(72) Inventor: LUO, Jinghuai, Shenzhen, Guangdong 518129 (CN); CHEN, Can, Shenzhen, Guangdong 518129 (CN); WANG, Na, Shenzhen, Guangdong 518129 (CN); TANG, Yinzhong, Shenzhen, Guangdong 518129 (CN); CHEN, Haijun, Shenzhen, Guangdong 518129 (CN)
(74) Representative: Körber, Martin Hans
(86) International application number: PCT/CN2021/101877
(87) International publication number: WO 2021/259332

(57) **Abstract**

This application discloses a hard disk mounting mechanism, a hard disk assembly, and an electronic device, and pertains to the field of communication technologies. The hard disk mounting mechanism includes a support frame, a transfer circuit board, and a plurality of electrical connector groups. The support frame includes a first side plate, a panel, and a second side plate that are perpendicularly connected in sequence. The first side plate, the panel, and the second side plate cooperate to form an inner cavity of the support frame. The inner cavity includes a plurality of hard disk mounting areas used to accommodate hard disks. The transfer circuit board is disposed in the inner cavity, and is disposed on a side part of the hard disk mounting area. Each electrical connector group corresponds to one hard disk mounting area. The electrical connector group includes a first electrical connector and a second electrical connector. One end of the first electrical connector is electrically connected to the transfer circuit board, and the other end is configured to be electrically connected to the hard disk. One end of the second electrical connector is electrically connected to the transfer circuit board, and the other end is configured to be electrically connected to the electronic device. The transfer circuit board is wired at a side part of the hard disk accommodated in the hard disk mounting area. Space in a thickness direction of the hard disk mounting mechanism is not occupied. This helps increase hard disk density.

## Description

This application claims priority to Chinese Patent Application No. 202010590820.6, filed with the China National Intellectual Property Administration on June 24, 2020 and entitled "HARD DISK MOUNTING MECHANISM, HARD DISK ASSEMBLY, AND ELECTRONIC DEVICE", which is incorporated herein by reference in its entirety.

### TECHNICAL FIELD

The present disclosure relates to the field of communication technologies, and in particular, to a hard disk mounting mechanism, a hard disk assembly, and an electronic device.

### BACKGROUND

With explosive growth of information data, an electronic device such as a server or a memory usually bears a high-density hard disk, to obtain a higher data storage capability. The hard disk is fastened to a hard disk mounting mechanism, and the hard disk and the hard disk mounting mechanism are placed in a disk enclosure of the electronic device as a whole, to implement mounting of the hard disk in the electronic device.

In a related technology, an overall hard disk mounting mechanism is relatively thick, causing a quantity of disk enclosures in the electronic device to be reduced.

### SUMMARY

In view of this, the present disclosure provides a hard disk mounting mechanism, a hard disk assembly, and an electronic device, to resolve the foregoing technical problem.

Specifically, the following technical solutions are included:

According to an aspect, an embodiment of the present disclosure provides a hard disk mounting mechanism. The hard disk mounting mechanism includes a support frame, a transfer circuit board, and a plurality of electrical connector groups.

The support frame includes a first side plate, a panel, and a second side plate that are perpendicularly connected in sequence. The first side plate, the panel, and the second side plate cooperate to form an inner cavity of the support frame, the inner cavity includes a plurality of hard disk mounting areas, and the hard disk mounting area is used to accommodate a hard disk.

The transfer circuit board is disposed in the inner cavity, and is disposed on a side part of the hard disk mounting area.

A quantity of the plurality of electrical connector groups is the same as a quantity of the plurality of hard disk mounting areas, and each electrical connector group corresponds to one hard disk mounting area.

The electrical connector group includes a first electrical connector and a second electrical connector.

One end of the first electrical connector is electrically connected to the transfer circuit board, and the other end is configured to be electrically connected to a hard disk accommodated in a corresponding hard disk mounting area.

One end of the second electrical connector is electrically connected to the transfer circuit board, and the other end is configured to be electrically connected to an electronic device.

In a possible implementation, the transfer circuit board includes a plurality of first rigid circuit boards, a plurality of second rigid circuit boards, and a plurality of flexible circuit boards.

The plurality of first rigid circuit boards are alternately disposed, starting from a hard disk mounting area farthest away from the panel, between the first side plate and a corresponding hard disk mounting area, and between the second side plate and a corresponding hard disk mounting area.

The second rigid circuit board is disposed on a side that is of a corresponding hard disk mounting area and that is away from and parallel to the panel.

The first rigid circuit board is electrically connected to the second rigid circuit board by using the flexible circuit board.

In a possible implementation, the transfer circuit board includes at least one first rigid circuit board, a plurality of second rigid circuit boards, and a plurality of flexible circuit boards.

The first rigid circuit board is disposed between the first side plate and a corresponding hard disk mounting area.

The second rigid circuit board is disposed on a side that is of a corresponding hard disk mounting area and that is away from and parallel to the panel.

The first rigid circuit board is electrically connected to the second rigid circuit board by using the flexible circuit board.

In a possible implementation, the flexible circuit board includes a first flexible part and a second flexible part.

The first flexible part is disposed between the first rigid circuit board and the second rigid circuit board.

The second flexible part is disposed between two adjacent first rigid circuit boards.

Each of the first flexible part and the second flexible part includes a first segment and a second segment that are sequentially connected in a direction away from the panel.

The first segment of the first flexible part is separated from the first segment of the second flexible part, and the second segment of the first flexible part is connected to the second segment of the second flexible part.

In a possible implementation, the first rigid circuit board, the second rigid circuit board, and the flexible circuit board are vertically disposed relative to a bottom of the inner cavity of the support frame.

In a possible implementation, the first electrical connector is disposed on a first side of the second rigid circuit board, and is configured to be electrically connected to the hard disk in the corresponding hard disk mounting area. The first side is a side that is of the second rigid circuit board and that faces the corresponding hard disk mounting area.

A plurality of second electrical connectors are disposed on a second side of a second rigid circuit board farthest away from the panel, and are configured to be electrically connected to a backplane of the electronic device. The second side is a side that is of the second rigid circuit board farthest away from the panel and that is away from the corresponding hard disk mounting area.

In a possible implementation, the first electrical connector is disposed on a first side of the second rigid circuit board, and is configured to be electrically connected to the hard disk in the corresponding hard disk mounting area. The first side is a side that is of the second rigid circuit board and that faces the corresponding hard disk mounting area.

The second electrical connector is an edge connector. The second electrical connector is disposed at an end of the flexible circuit board farthest away from the panel, and is configured to be electrically connected to a backplane of the electronic device.

In a possible implementation, the first rigid circuit board is fixedly connected to the first side plate or the second side plate at a corresponding position.

According to another aspect, an embodiment of the present disclosure provides a hard disk assembly. The hard disk assembly includes any one of the foregoing hard disk mounting mechanisms and a plurality of hard disks.

The plurality of hard disks are respectively fastened in a plurality of hard disk mounting areas of the hard disk mounting mechanism.

According to still another aspect, an embodiment of the present disclosure provides an electronic device. The electronic device includes the foregoing hard disk assembly.

At least the following beneficial effects of the technical solutions provided in embodiments of the present disclosure are included.

According to the hard disk mounting mechanism provided in embodiments of the present disclosure, a transfer circuit board is disposed in an inner cavity of a support frame, and is distributed along a side part of a hard disk mounting area, that is, the transfer circuit board is wired at a side part of a hard disk accommodated in the hard disk mounting area. Space in a thickness direction of the hard disk mounting mechanism is not occupied, thereby avoiding reducing the quantity of disk enclosures on the panel of the electronic device, and helping achieve a better effect of increasing hard disk density.

### BRIEF DESCRIPTION OF DRAWINGS

FIG. 1 is a schematic diagram of a structure of a hard disk mounting mechanism according to a related technology;
FIG. 2 is a schematic diagram of a structure of a hard disk assembly according to a related technology;
FIG. 3 is a schematic diagram of a structure of an example hard disk mounting mechanism that can bear two hard disks according to an embodiment of the present disclosure;
FIG. 4 is a schematic diagram of a structure of a transfer circuit board that is used in FIG. 3 and that is obtained from a first angle of view according to an embodiment of the present disclosure;
FIG. 5 is a schematic diagram of a structure of a transfer circuit board that is used in FIG. 3 and that is obtained from a second angle of view according to an embodiment of the present disclosure;
FIG. 6 is a schematic diagram of a structure of an example hard disk assembly formed by the hard disk mounting mechanism shown in FIG. 3 according to an embodiment of the present disclosure;
FIG. 7 is a schematic diagram of a structure of an example hard disk assembly that bears three hard disks according to an embodiment of the present disclosure;
FIG. 8 is a schematic diagram of a structure of another example hard disk assembly that bears three hard disks according to an embodiment of the present disclosure;
FIG. 9 is a schematic diagram of a structure of an example transfer circuit board that may be connected to three hard disks according to an embodiment of the present disclosure;
FIG. 10 is a schematic diagram of a structure of a hard disk mounting mechanism obtained based on the transfer circuit board shown in FIG. 9 according to an embodiment of the present disclosure; and
FIG. 11 is a schematic diagram of a structure of a hard disk assembly obtained based on the hard disk mounting mechanism shown in FIG. 10 according to an embodiment of the present disclosure.

Reference numerals have the following meanings:
1: hard disk mounting mechanism;
11: support frame; 111: hard disk mounting area;
1101: first side plate;
1102: panel;
1103: second side plate;
1104: handle structure;
1105: screw mounting hole;
12: transfer circuit board;
1211: first rigid circuit board;
1212: second rigid circuit board;
122: flexible circuit board;
1221: first flexible part;
1222: second flexible part;
13: electrical connector group;
131: first electrical connector;
132: second electrical connector; and
2: hard disk.

### DESCRIPTION OF EMBODIMENTS

To make technical solutions and advantages of the present disclosure clearer, the following further describes implementations of the present disclosure in detail with reference to the accompanying drawings.

A hard disk array is disposed on a panel of an electronic device such as a server, and the hard disk array includes a plurality of disk enclosures with card slots. A hard disk is usually fastened to a hard disk mounting mechanism, for example, to a handle bar. The hard disk and the hard disk mounting mechanism are inserted into a card slot of a corresponding disk enclosure as an FRU (Field Replace Unit, field replace unit), to implement mounting of the hard disk on the electronic device.

Currently, with explosive growth of information data, a requirement for a data storage capability of the electronic device is increasingly high. Consequently, hard disk density borne by the electronic device is increased accordingly. Due to a limited cross-sectional size of the panel of the electronic device, it is not realistic to increase hard disk density in a manner of increasing a quantity of disk enclosures disposed on the panel of the electronic device, and increasing a quantity of hard disks borne by the hard disk mounting mechanism is currently a general manner of increasing hard disk density.

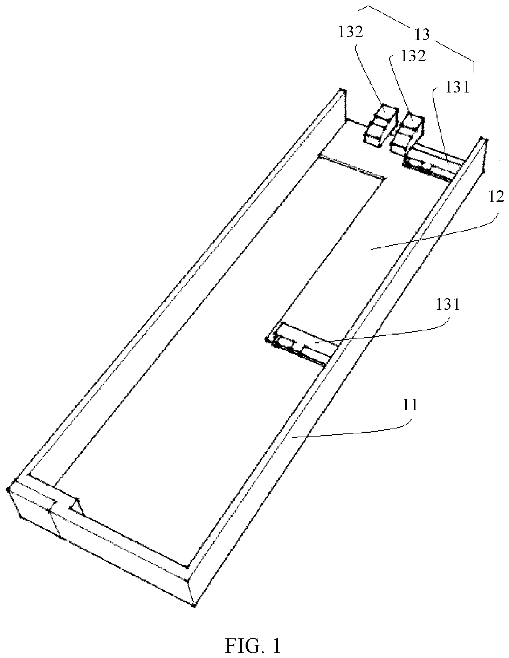

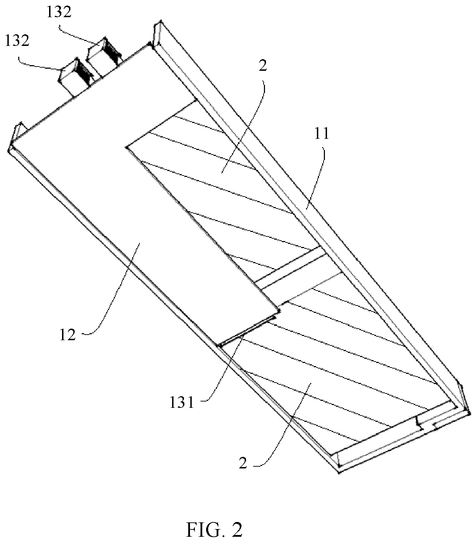

In a related technology, one hard disk mounting mechanism is used to simultaneously bear two hard disks. As shown in FIG. 1 and FIG. 2, the hard disk mounting mechanism includes a support frame 11 that simultaneously bears two hard disks 2, a transfer circuit board 12 disposed at a bottom of the support frame 11, and two electrical connector groups 13 disposed on the transfer circuit board 12.

The hard disks 2 are arranged in a front-back direction on the support frame 11, and the transfer circuit board 12 is a rigid circuit board. To enable both front and back hard disks 2 to be electrically connected to a corresponding first electrical connector 131, in the related technology, the transfer circuit board 12 is disposed at the bottom of the support frame 11 and extends in the front-back direction (that is, the transfer circuit board 12 is wired at a bottom of the hard disk 2). In addition, the transfer circuit board 12 is further connected to the electrical connector group 13. Consequently, an overall thickness of the hard disk mounting mechanism is increased, for example, by approximately 3 mm in comparison with a previous thickness. A size requirement of the panel of the electronic device in a height direction is extremely strict. When a thickness of the hard disk mounting mechanism is increased, only the quantity of disk enclosures on the panel of the electronic device can be reduced to accommodate a thickness increased by the handle bar. In this way, density of the disk enclosure is reduced, and an effect of increasing hard disk density is not desirable.

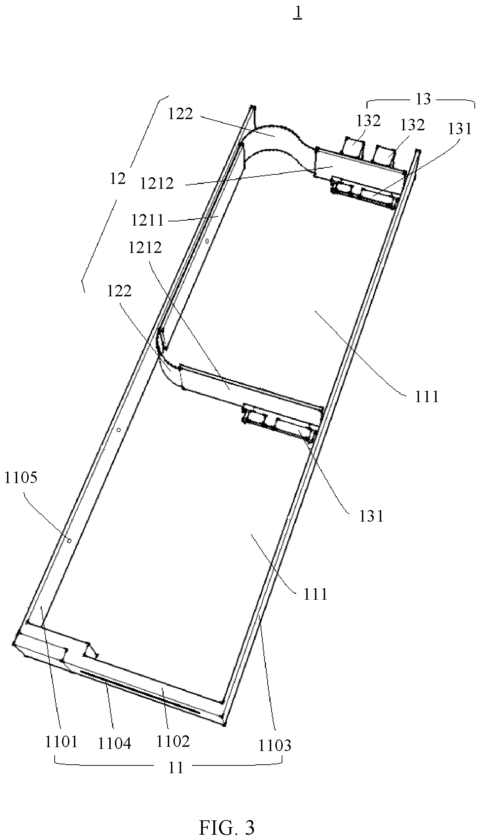

To resolve the foregoing technical problem, an embodiment of the present disclosure provides a hard disk mounting mechanism 1. As shown in FIG. 3, the hard disk mounting mechanism 1 includes a support frame 11, a transfer circuit board 12, and a plurality of electrical connector groups 13.

The support frame 11 includes a first side plate 1101, a panel 1102, and a second side plate 1103 that are perpendicularly connected in sequence. The first side plate 1101, the panel 1102, and the second side plate 1103 cooperate to form an inner cavity of the support frame 11, the inner cavity of the support frame 11 includes a plurality of hard disk mounting areas 111 (that is, two or more hard disk mounting areas 111), and the hard disk mounting areas 111 are used to accommodate the hard disks 2.

The transfer circuit board 12 is disposed in the inner cavity of the support frame 11, and is disposed on a side part of the hard disk mounting area 111. That is, the transfer circuit board 12 is disposed on a remaining inner cavity part except the plurality of hard disk mounting areas 111 in the inner cavity of the support frame 11, and the remaining inner cavity part is located at the side part of the hard disk mounting area 111.

A quantity of the plurality of electrical connector groups 13 is the same as a quantity of the plurality of hard disk mounting areas 111, and each electrical connector group 13 corresponds to one hard disk mounting area 111. The electrical connector group 13 includes a first electrical connector 131 and a second electrical connector 132. One end of the first electrical connector 131 is electrically connected to the transfer circuit board 12, and the other end is configured to be electrically connected to a hard disk 2 accommodated in a corresponding hard disk mounting area 111. One end of the second electrical connector 132 is electrically connected to the transfer circuit board 12, and the other end is configured to be electrically connected to the electronic device.

In the hard disk mounting mechanism 1 provided in this embodiment of the present disclosure, the quantity of the plurality of electrical connector groups 13 is the same as the quantity of the plurality of hard disk mounting areas 111, that is, the quantity of the plurality of electrical connector groups 13 is the same as a quantity of the hard disks 2, and each electrical connector group 13 corresponds to one hard disk mounting area 111. This means that each electrical connector group 13 corresponds to one hard disk 2.

The first electrical connector 131 and the second electrical connector 132 in each electrical connector group 13 are electrically connected by using the transfer circuit board 12. In addition, the first electrical connector 131 is configured to be electrically connected to a corresponding hard disk 2, and the second electrical connector 132 is configured to be electrically connected to the electronic device. In this way, a conductive path is formed among the hard disk 2, the first electrical connector 131, the transfer circuit board 12, the second electrical connector 132, and the electronic device.

According to the hard disk mounting mechanism 1 provided in this embodiment of the present disclosure, the transfer circuit board 12 is disposed in the inner cavity of the support frame 11, and is distributed along the side part of the hard disk mounting area 111, that is, the transfer circuit board 12 is wired at the side part of the hard disk 2 accommodated in the hard disk mounting area 111. Space in a thickness direction of the hard disk mounting mechanism 1 is not occupied, thereby avoiding reducing the quantity of disk enclosures on the panel of the electronic device, and helping achieve a better effect of increasing hard disk density.

The following describes an effect of increasing hard disk density in this embodiment of the present disclosure by using example data. In addition, an electronic device used in the following example is a server.
(1) A case in the related technology in which one hard disk is mounted on one hard disk mounting mechanism

The server generally includes a 2U specification and a 4U specification. U is a unit that represents an external size of the server, and is an abbreviation of unit.

A 2U server includes 12 disk enclosures, and a 4U server includes 24 disk enclosures. One hard disk is mounted on each hard disk mounting mechanism. After an FRU formed by the hard disk and the hard disk mounting mechanism is inserted into the disk enclosure, the 2U server can accommodate only 12 hard disks and the 4U server can accommodate only 24 hard disks.

(2) A case in the related technology in which two hard disks are mounted on one hard disk mounting mechanism and the transfer circuit board is disposed at a bottom of the hard disk mounting mechanism

Because the transfer circuit board is disposed at the bottom of the hard disk mounting mechanism, that is, below the bottom of the hard disk, the thickness of the hard disk mounting mechanism is increased by approximately 3 mm. This reduces a quantity of disk enclosures on a server panel. In the 2U server, 12 disk enclosures are decreased to 8 disk enclosures, and in the 4U server, 24 disk enclosures are decreased to 20 disk enclosures. Two hard disks are mounted on each hard disk mounting mechanism. After an FRU formed by the hard disks and the hard disk mounting mechanism is inserted into the disk enclosure, the 2U server can accommodate only 16 hard disks and the 4U server can accommodate only 40 hard disks.

Compared with the foregoing case (1) in which "one hard disk is mounted on one hard disk mounting mechanism", hard disk density borne by a server panel of the 2U server is increased by 33%, and hard disk density borne by a server panel of the 4U server is increased by 67%.

(3) A state in this embodiment of the present disclosure in which two hard disks are mounted on one hard disk mounting mechanism, and the transfer circuit board is disposed on the side part of the hard disk mounting area 111

Because the transfer circuit board is disposed on the side part of the hard disk mounting area 111, that is, disposed around the side part of the hard disk 2 in actual application, space in a thickness direction of the hard disk mounting mechanism 1 is not occupied, thereby avoiding reducing the quantity of disk enclosures on the server panel. 12 disk enclosures can remain in the 2U server, and 24 disk enclosures can remain in the 4U server. Two hard disks are mounted on each hard disk mounting mechanism. After an FRU formed by the hard disks and the hard disk mounting mechanism is inserted into the disk enclosure, the 2U server can accommodate 24 hard disks and the 4U server can accommodate 48 hard disks.

Compared with the foregoing case (1) in which "one hard disk is mounted on one hard disk mounting mechanism", hard disk density borne by the server panel of the 2U server is increased by 100%, and hard disk density borne by a server panel of the 4U server is increased by 100%.

It can be learned that in comparison with the related technology, density of the hard disks mounted on the server is significantly increased by using the hard disk mounting mechanism 1 provided in this embodiment of the present disclosure.

In the related technology, when one hard disk mounting mechanism bears two hard disks, a gap usually exists between the two hard disks. In addition, a size requirement of the panel of the electronic device in a width direction is more relaxed than a size requirement in a height direction. In this embodiment of the present disclosure, the foregoing two factors provide support for additionally disposing the remaining inner cavity part used to accommodate the transfer circuit board 12 except the plurality of hard disk mounting areas 111 inside the support frame 11. In this way, the formed hard disk mounting mechanism 1 has no adverse impact on a size layout of the panel of the electronic device, and further avoids reducing the quantity of disk enclosures on the panel of the electronic device, having great significance in improving a data storage capability of the electronic device.

In this embodiment of the present disclosure, the inner cavity of the support frame 11 is used to accommodate the hard disk 2. The support frame 11 includes the first side plate 1101, the panel 1102, and the second side plate 1103 that are perpendicularly connected in sequence. The first side plate 1101, the panel 1102, and the second side plate 1103 cooperate to form the support frame 11, so that a structure of the support frame 11 is simple and lightweight. The first side plate 1101, the panel 1102, and the second side plate 1103 may be manufactured by using a sheet metal part or a plastic part.

To facilitate insertion and removing of the hard disk mounting mechanism 1 so that the hard disk mounting mechanism 1 can easily enter and exit the disk enclosure on the electronic device, as shown in FIG. 3, in this embodiment of the present disclosure, a handle structure 1104 is disposed on the panel 1102. The handle structure 1104 may be a handle slot recessed into the panel 1102, or may be a pull block protruding out of the panel 1102. For this example, the hard disk mounting mechanism 1 is considered as the handle bar.

Further, to improve stability of the hard disk mounting mechanism 1 when placed in a card slot of the disk enclosure of the electronic device, an elastic self-locking convex block is further disposed on the panel 1102, and a locking slot that matches the elastic self-locking convex block is correspondingly disposed at a corresponding position on an inner surface of a side wall of the card slot. After the hard disk mounting mechanism 1 is inserted into the card slot of the electronic device, the elastic self-locking convex block is adapted to enter the locking slot, to implement self-locking of the hard disk mounting mechanism 1. When the hard disk mounting mechanism 1 needs to be removed from the card slot of the electronic device, pressing the elastic self-locking convex block exits the hard disk mounting mechanism 1 from the locking slot, so that an operation of removing the hard disk mounting mechanism 1 is performed.

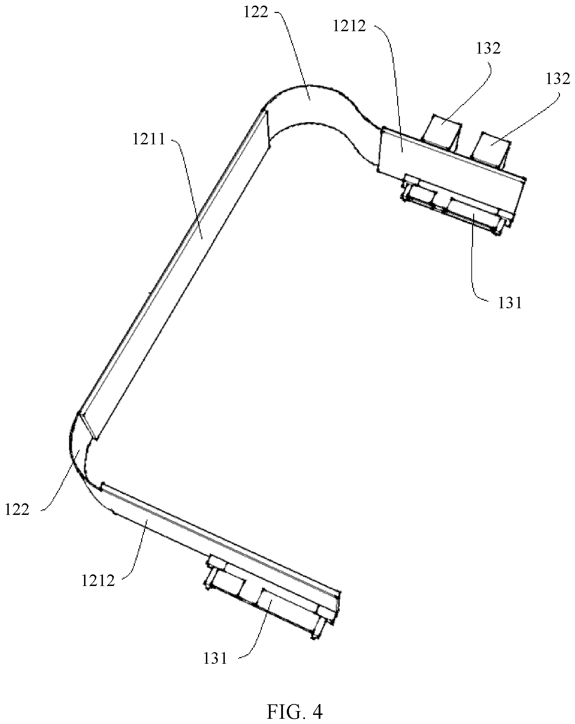

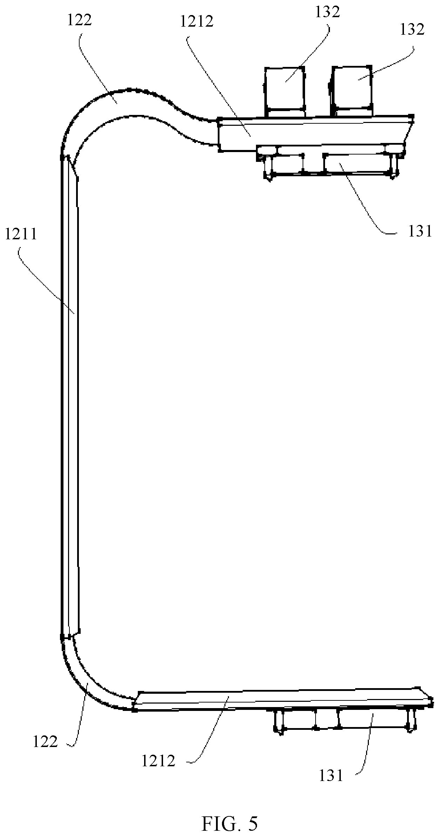

In this embodiment of the present disclosure, the transfer circuit board 12 is a rigid-flex circuit board. For example, as shown in FIG. 4 or FIG. 5, the transfer circuit board 12 includes a first rigid circuit board 1211, a second rigid circuit board 1212, and a flexible circuit board 122. Based on bendability of the flexible circuit board 122, the transfer circuit board 12 can be adaptively distributed along different side parts of the hard disk mounting area 111, and based on rigidity of the second rigid circuit board 1212, the electrical connector group 13 can be mounted and supported. In this way, the electrical connector group 13 connected to the transfer circuit board 12 can be electrically connected to the hard disks 2 at different positions. After an FRU formed by the hard disk mounting mechanism 1 and the hard disk 2 is inserted into the card slot of the disk enclosure of the electronic device, the electrical connector group 13 connected to the transfer circuit board 12 can be further electrically connected to a backplane of the electronic device, so that a conductive path is formed between the hard disk 2 and the electronic device.

A plurality of connection circuits are printed on the transfer circuit board 12 (the plurality of connection circuits are printed on both a rigid board segment and a flexible board segment), and the plurality of connection circuits are in one-to-one electrical connections to the plurality of electrical connector groups 13. In other words, the connection circuits are independent of each other, and are in a one-to-one correspondence with the electrical connector groups 13 that are independent of each other. In the circuit printing manner, a structure of the transfer circuit board 12 can be simplified, and a service life of the connection circuit can be prolonged.

The rigid board segment and the flexible board segment of the transfer circuit board 12 are connected in a lamination manner, to obtain an integrally molded transfer circuit board 12. The transfer circuit board 12 has high strength.

For the transfer circuit board 12 with the foregoing rigid-flex circuit board structure, an arrangement manner of the transfer circuit board 12 in the inner cavity of the support frame 11 includes but is not limited to the following:

In a possible implementation, this embodiment of the present disclosure provides a hard disk mounting mechanism. The support frame 11 of the hard disk mounting mechanism can bear three or more hard disks 2. The transfer circuit board 12 includes a plurality of first rigid circuit boards 1211, a plurality of second rigid circuit boards 1212, and a plurality of flexible circuit boards 122.

A quantity of the first rigid circuit boards 1211 is one less than a quantity of hard disks borne by the hard disk mounting mechanism, and a quantity of the second rigid circuit boards 1212 is the same as and corresponding to the quantity of hard disks borne by the hard disk mounting mechanism.

The plurality of first rigid circuit boards 1211 are alternately disposed, starting from a hard disk mounting area 111 farthest away from the panel 1102, between the first side plate 1101 and a corresponding hard disk mounting area 111, and between the second side plate 1103 and a corresponding hard disk mounting area 111. The second rigid circuit board 1212 is disposed on a side that is of a corresponding hard disk mounting area 111 and that is away from and parallel to the panel 1102.

In this implementation, the electrical connector group 13 on the second rigid circuit board 1212 is specifically that the first electrical connector 131 corresponds to a position of a connector port on the corresponding hard disk 2. When the hard disk 2 is a standard part, to facilitate smooth wiring of the transfer circuit board 12 in the foregoing manner, the hard disks 2 are sequentially connected to the first electrical connector 131 on the second rigid circuit board 1212, so that during mounting of two adjacent hard disks 2, a front side of one hard disk 2 faces upwards and a back side of the other hard disk 2 faces upwards.

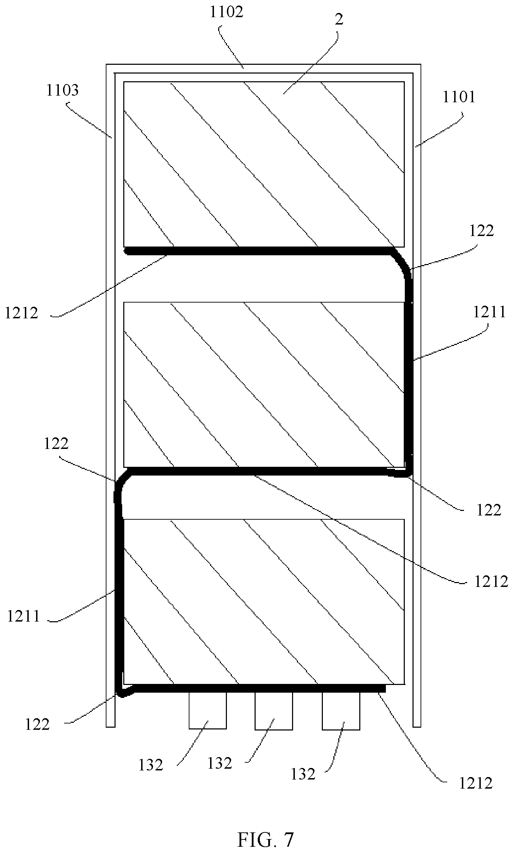

For example, as shown in FIG. 7, the inner cavity of the support frame 11 of the hard disk mounting mechanism includes three hard disk mounting areas 111 (not shown in the figure, whose positions are occupied by the hard disks 2) that are sequentially distributed in a direction away from the panel 1102, to bear three hard disks 2. In this way, a quantity of the first rigid circuit boards 1211 is two and a quantity of the second rigid circuit boards 1212 is three. The transfer circuit board 12 includes the second rigid circuit board 1212 (farthest away from the panel 1102), the flexible circuit board 122, the first rigid circuit board 1211, the flexible circuit board 122, the second rigid circuit board 1212 (disposed at a middle position), the flexible circuit board 122, the first rigid circuit board 1211, the flexible circuit board 122, and the second rigid circuit board 1212 (closest to the panel 1102) that are sequentially connected in a direction away from the panel 1102.

Starting from a hard disk mounting area 111 farthest away from the panel 1102, the 1^{st} first rigid circuit board 1211 is disposed between the first side plate 1101 and the hard disk mounting area 111 farthest away from the panel 1102, and the 2^{nd} first rigid circuit board 1211 is disposed between the second side plate 1103 and a hard disk mounting area 111 disposed at a middle position.

Starting from the hard disk mounting area 111 farthest away from the panel 1102, the 1^{st} second rigid circuit board 1212 is disposed on a side that is of the hard disk mounting area 111 farthest away from the panel 1102 and that is away from and parallel to the panel 1102, the 2^{nd} second rigid circuit board 1212 is disposed on a side that is of the hard disk mounting area 111 disposed at the middle position and that is away from and parallel to the panel 1102, and the 3^{rd} second rigid circuit board 1212 is disposed on a side that is of a hard disk mounting area 111 closest to the panel 1102 and that is away from and parallel to the panel 1102.

In this implementation, the first rigid circuit board 1211 is electrically connected to the second rigid circuit board 1212 by using the flexible circuit board 122, and the transfer circuit board 12 is in an integrated strip shape. This helps make a manufacturing process of the transfer circuit board 12 simpler and easier to operate. Based on bendability of the flexible circuit board 122, the foregoing first rigid circuit boards 1211 and the foregoing second rigid circuit boards 1212 can be adaptively distributed along different side parts of the hard disk mounting area 111.

The second rigid circuit board 1212, the flexible circuit board 122, and the first rigid circuit board 1211 cooperate to form the transfer circuit board 12 with a strip shape structure. A length of the transfer circuit board 12 is determined by a quantity of hard disks 2 mounted on the hard disk mounting mechanism 1. A larger quantity of mounted hard disks 2 indicates a greater length of the transfer circuit board 12. A width of the transfer circuit board 12 is less than or equal to a depth of the inner cavity of the support frame 11 to ensure that the transfer circuit board 12 is disposed inside the inner cavity of the support frame 11.

In another possible implementation, this embodiment of the present disclosure provides another hard disk mounting mechanism. The support frame 11 of the hard disk mounting mechanism can bear two or more hard disks 2. The transfer circuit board 12 includes at least one first rigid circuit board 1211, a plurality of second rigid circuit boards 1212, and a plurality of flexible circuit boards 122.

A quantity of the first rigid circuit boards 1211 is one less than a quantity of hard disks borne by the hard disk mounting mechanism, and a quantity of the second rigid circuit boards 1212 is the same as and corresponding to the quantity of hard disks borne by the hard disk mounting mechanism.

The first rigid circuit board 1211 is disposed between the first side plate 1101 and the corresponding hard disk mounting area 111 (essentially, the first rigid circuit board 1211 may also be disposed between the second side plate 1103 and the corresponding hard disk mounting area 111, and the first side plate 1101 and the second side plate 1103 are considered to have a same meaning herein). The second rigid circuit board 1212 is disposed on a side that is of the corresponding hard disk mounting area 111 and that is away from and parallel to the panel 1102.

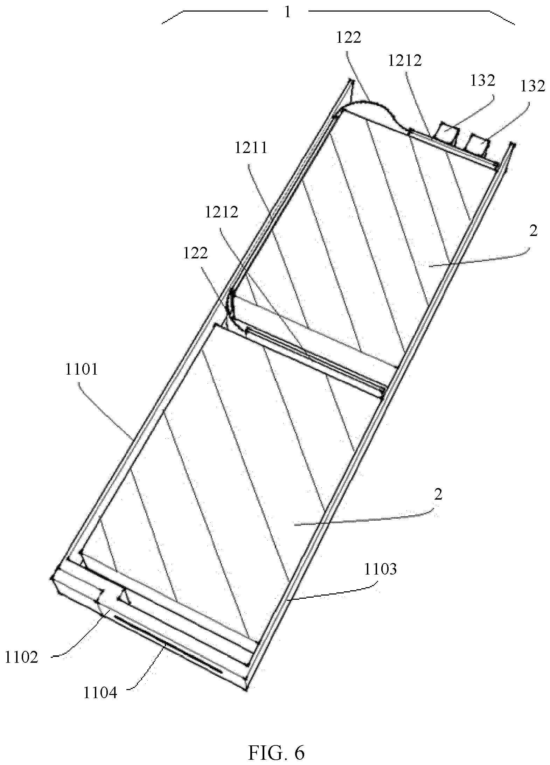

For example, the support frame 11 of the hard disk mounting mechanism can bear two hard disks 2. As shown in FIG. 6, the inner cavity of the support frame 11 of the hard disk mounting mechanism includes two hard disk mounting areas 111 (not shown in the figure, whose positions are occupied by the hard disks 2) that are sequentially distributed in a direction away from the panel 1102, to bear two hard disks 2 (that is, the first hard disk mounting area 111 and the second hard disk mounting area 111, each of which accommodates one hard disk 2). In this way, a quantity of the first rigid circuit boards 1211 is one, a quantity of the second rigid circuit boards 1212 is two, and the transfer circuit board 12 includes the second rigid circuit board 1212 (away from the panel 1102), the flexible circuit board 122, the first rigid circuit board 1211, the flexible circuit board 122, and the second rigid circuit board 1212 (close to the panel 1102) that are sequentially connected in a direction away from the panel 1102.

Starting from the hard disk mounting area 111 farthest away from the panel 1102, the 1^{st} first rigid circuit board 1211 is disposed between the first side plate 1101 and the hard disk mounting area 111 farthest away from the panel 1102.

Starting from the hard disk mounting area 111 farthest away from the panel 1102, the 1^{st} second rigid circuit board 1212 is disposed on a side that is of the hard disk mounting area 111 farthest away from the panel 1102 and that is away from and parallel to the panel 1102, and the 2^{nd} second rigid circuit board 1212 is disposed on a side that is of a hard disk mounting area 111 close to the panel 1102 and that is away from and parallel to the panel 1102.

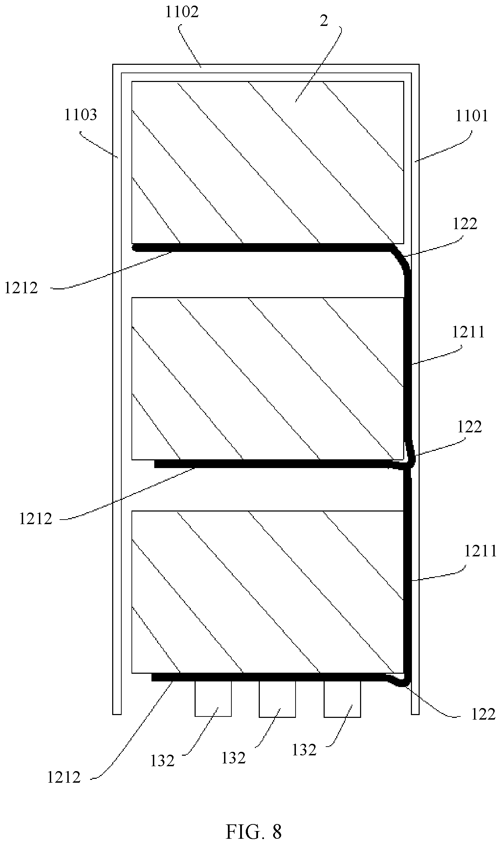

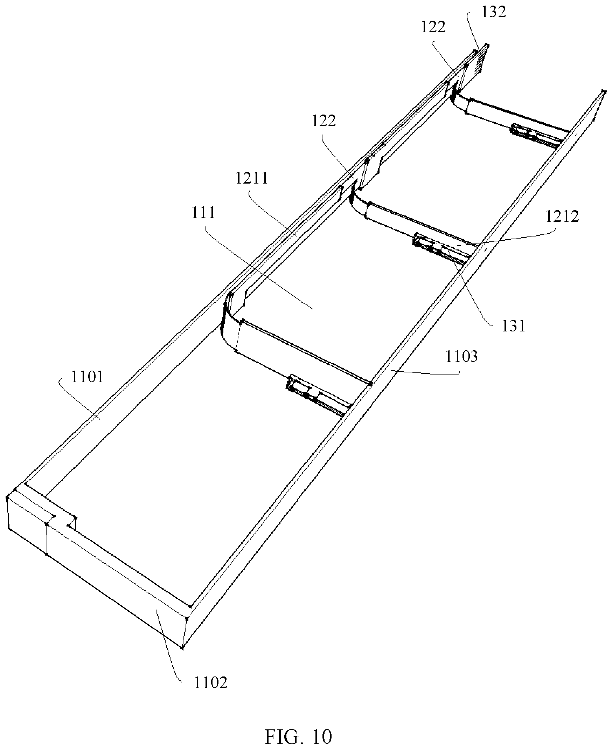

For example, the support frame 11 of the hard disk mounting mechanism can bear three or more hard disks 2. FIG. 8 and FIG. 10 each show that the support frame 11 bears three hard disks 2. As shown in FIG. 8 or FIG. 10, the inner cavity of the support frame 11 of the hard disk mounting mechanism includes three hard disk mounting areas 111 (not shown in the figure, whose positions are occupied by the hard disks 2) that are sequentially distributed in a direction away from the panel 1102, to bear three hard disks 2. In this way, a quantity of the first rigid circuit boards 1211 is two, and a quantity of the second rigid circuit boards 1212 is three. The transfer circuit board 12 includes the second rigid circuit board 1212 (farthest away from the panel 1102), the flexible circuit board 122, the first rigid circuit board 1211, the flexible circuit board 122 (disposed at a middle position), the first rigid circuit board 1211, the flexible circuit board 122, and the second rigid circuit board 1212 (closest to the panel 1102) that are sequentially connected in a direction away from the panel 1102, and the flexible circuit board 122 disposed at the middle position is further electrically connected to the second rigid circuit board 1212 (disposed at a middle position).

Starting from the hard disk mounting area 111 farthest away from the panel 1102, the 1^{st} first rigid circuit board 1211 is disposed between the first side plate 1101 and the hard disk mounting area 111 farthest away from the panel 1102, the 2^{nd} first rigid circuit board 1211 is disposed between the first side plate 1101 and the hard disk mounting area 111 disposed at the middle position, and the two first rigid circuit boards 1211 are distributed on a same side of the hard disk mounting area 111.

Starting from the hard disk mounting area 111 farthest away from the panel 1102, the 1^{st} second rigid circuit board 1212 is disposed on a side that is of the hard disk mounting area 111 farthest away from the panel 1102 and that is away from and parallel to the panel 1102, the 2^{nd} second rigid circuit board 1212 is disposed on a side that is of the hard disk mounting area 111 disposed in the middle and that is away from and parallel to the panel 1102, and the 3^{rd} second rigid circuit board 1212 is disposed on a side that is of the hard disk mounting area 111 closest to the panel 1102 and that is away from and parallel to the panel 1102.

In this implementation, the first rigid circuit board 1211 is electrically connected to the second rigid circuit board 1212 by using the flexible circuit board 122, and the plurality of first rigid circuit boards 1211 are also electrically connected by using the flexible circuit board 122. In this implementation, the quantity of used flexible circuit boards 122 is reduced, helping save a raw material. Based on bendability of the flexible circuit board 122, each of the foregoing second rigid circuit boards 1212 can be adaptively disposed on a side part of a corresponding hard disk mounting area 111.

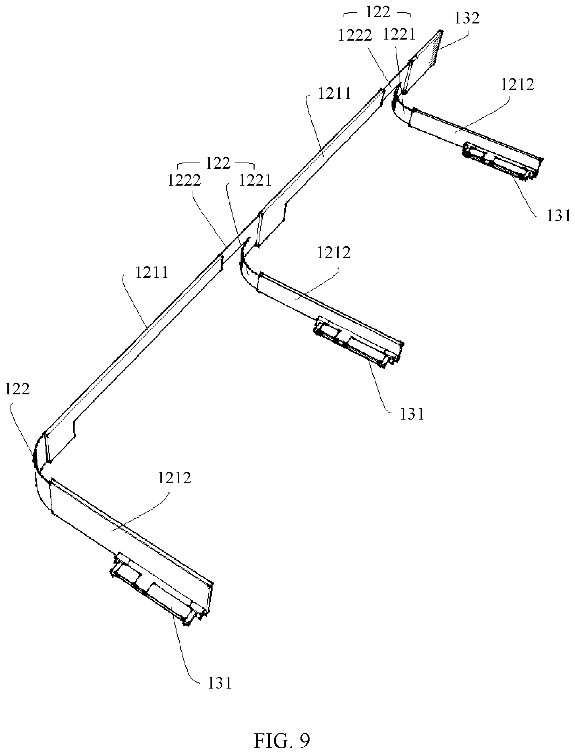

In an example, as shown in FIG. 9, for a flexible circuit board 122 that is disposed between two adjacent first rigid circuit boards 1211 and that is further disposed between the first rigid circuit board 1211 and the second rigid circuit board 1212, a part of the flexible circuit board 122 that is disposed between the first rigid circuit board 1211 and the second rigid circuit board 1212 is referred to as a first flexible part 1221, and another part of the flexible circuit board 122 that is disposed between the two adjacent first rigid circuit boards 1211 is referred to as a second flexible part 1222.

As shown in FIG. 9, each of the first flexible part 1221 and the second flexible part 1222 includes a first segment and a second segment that are sequentially connected in a direction away from the panel 1102. The first segment of the first flexible part 1221 is separated from the first segment of the second flexible part 1222, and the second segment of the first flexible part 1221 is connected to (that is, in an integral structure with) the second segment of the second flexible part 1222. The foregoing design not only facilitates smooth arrangement of the plurality of first rigid circuit boards 1211 along a same side of the hard disk mounting cavity 111, but also helps enable the plurality of second rigid circuit boards 1212 to respectively extend into corresponding connector ports of the hard disk 2, and to be electrically connected to the connector ports of the hard disk 2 by using the first electrical connectors 131 on the second rigid circuit boards 1212.

It can be learned from the foregoing description that after the hard disk 2 is mounted on the hard disk mounting mechanism 1, the first rigid circuit board 1211 is disposed between a side wall of the support frame 11 and a side wall of the hard disk 2, to implement a function of supporting and wiring. The first rigid circuit board 1211 is fixedly connected to a first side plate 1101 or a second side plate 1103 at a corresponding position, for example, through screw connection or bonding connection, to improve stability of the transfer circuit board 12 when disposed in the inner cavity of the support frame 11.

In this embodiment of the present disclosure, a screw is used to fasten the transfer circuit board 12, and the screw may further simultaneously fasten the hard disk in the inner cavity of the support frame 11. A plurality of screw mounting holes 1105 are provided on the first side plate 1101 and the second side plate 1103, and a plurality of screw holes are also provided on the first rigid circuit board 1211 and corresponding positions on the side walls of the hard disk 2. The screw is in a threaded connection to both the screw mounting hole 1105 and the foregoing screw hole, so that fastening of both the transfer circuit board 12 and the hard disk 2 can be implemented. This fastening manner is convenient and reliable.

The second rigid circuit board 1212 is disposed on a side (which may be considered as behind each hard disk 2) that is of each hard disk 2 and that is parallel to and away from the panel 1102, to implement a function of supporting and mounting the electrical connector group 13.

In this embodiment of the present disclosure, as shown in FIG. 3, the first rigid circuit board 1211, the second rigid circuit board 1212, and the flexible circuit board 122 are vertically disposed relative to a bottom of the inner cavity of the support frame 11, that is, board surfaces of the first rigid circuit board 1211, the second rigid circuit board 1212, and the flexible circuit board 122 are all parallel to side walls of the hard disk 2, to save mounting space of the transfer circuit board 12, and implement miniaturization of a volume of the hard disk mounting mechanism 1. In a possible design, surfaces of the first side plate 1101, the first rigid circuit board 1211, and a first side wall that is of the hard disk 2 and that is perpendicular to the panel 1102 sequentially come into contact. In a possible design, surfaces of the second rigid circuit board 1212 and a second side wall that is of the hard disk 2 and that is parallel to and away from the panel 1102 come into contact.

In this embodiment of the present disclosure, as shown in FIG. 3, the electrical connector group 13 includes the first electrical connector 131 and the second electrical connector 132, and the first electrical connector 131 is electrically connected to the second electrical connector 132 by using the transfer circuit board 12. In addition, a quantity of the first electrical connectors 131 is the same as a quantity of the hard disk mounting areas 111 (that is, a quantity of the hard disks 2), and the first electrical connectors 131 are in a one-to-one correspondence with the hard disk mounting areas 111.

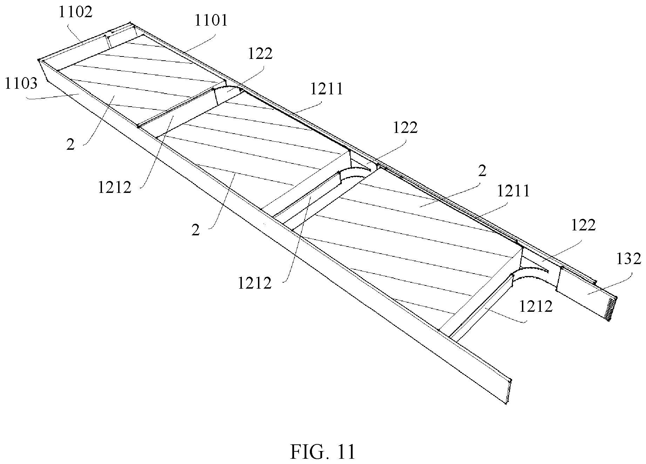

The first electrical connector 131 is disposed on a first side of the second rigid circuit board 1212, and is configured to be electrically connected to a hard disk 2 in a corresponding hard disk mounting area 111 (with reference to FIG. 6 or FIG. 11, the first electrical connector 131 is already connected to the hard disk 2, and therefore the first electrical connector 131 is not shown in the figure). The first side is a side that is of the second rigid circuit board 1212 and that faces the corresponding hard disk mounting area 111.

In a possible implementation, as shown in FIG. 7 or FIG. 8, a quantity of the second electrical connectors 132 is the same as and in a one-to-one correspondence with a quantity of the hard disk mounting areas 111, and a plurality of second electrical connectors 132 are disposed on a second side of a second rigid circuit board 1212 farthest away from the panel 1102, and are configured to be electrically connected to the backplane of the electronic device. The second side is a side that is of the second rigid circuit board 1212 farthest away from the panel 1102 and that is away from a corresponding hard disk mounting area 111. In this implementation, a flexible circuit board 122 farthest away from the panel 1102 is of an integrated structure.

In another possible implementation, as shown in FIG. 9, the second electrical connector 132 is arranged as an edge connector structure, is located at an end of the flexible circuit board 122 farthest away from the panel 1102, and is configured to be electrically connected to the backplane of the electronic device. In this implementation, the flexible circuit board 122 farthest away from the panel 1102 is of a partially separated structure. The flexible circuit board 122 farthest away from the panel 1102 includes the first flexible part 1221 disposed between a first rigid circuit board 1211 farthest away from the panel 1102 and a second rigid circuit board 1212 farthest away from the panel 1102, and the second flexible part 1222 disposed between the first rigid circuit board 1211 farthest away from the panel 1102 and the second electrical connector 132.

In this implementation, based on the fact that the second flexible part 1222 is partially separated from the first flexible part 1221, the second electrical connector 132 can be smoothly delivered to and electrically connected to the backplane of the electronic device under a bending action of the second flexible part 1222, without affecting an electrical connection of the first rigid circuit board 1211 farthest away from the panel 1102 to a corresponding hard disk 2 by using the first electrical connector 131 on the second rigid circuit board 1212.

According to another aspect, an embodiment of the present disclosure provides a hard disk assembly. As shown in FIG. 6, the hard disk assembly includes any one of the foregoing hard disk mounting mechanisms 1 and a plurality of hard disks 2. The plurality of hard disks 2 are respectively fastened in a plurality of hard disk mounting areas 111 (not shown in the figure, whose positions are occupied by the hard disks 2) of the hard disk mounting mechanism 1, and the plurality of hard disks 2 are respectively electrically connected to a plurality of electrical connector groups 13.

Each electrical connector group 13 includes a first electrical connector 131 and a second electrical connector 132 that are electrically connected by using a transfer circuit board 12. One end of the first electrical connector 131 is electrically connected to a second rigid circuit board 1212, and is specifically connected to a surface that is of the second rigid circuit board 1212 and that faces the hard disk 2. The other end of the first electrical connector 131 is electrically connected to the hard disk 2. One end of the second electrical connector 132 is electrically connected to a second rigid circuit board 1212 at a rearmost end, and is specifically connected to a surface that is of the second rigid circuit board 1212 and that faces a backplane of an electronic device. The other end of the second electrical connector 132 is configured to be electrically connected to the backplane of the electronic device.

Because the hard disk mounting mechanism 1 provided in this embodiment of the present disclosure is used, the hard disk assembly provided in this embodiment of the present disclosure effectively increases a quantity of borne hard disks without additionally increasing a thickness.

In this embodiment of the present disclosure, two or more hard disks 2 may be mounted on the hard disk mounting mechanism 1. In a possible design, two hard disks 2 are mounted on each hard disk mounting mechanism 1, and the hard disks 2 are fastened to a support frame 11 of the hard disk mounting mechanism 1 by using a screw.

According to still another aspect, an embodiment of the present disclosure provides an electronic device. The electronic device includes any one of the foregoing related hard disk assemblies.

In a possible design, a hard disk array is disposed on a front panel of the electronic device provided in this embodiment of the present disclosure, the hard disk array includes a plurality of disk enclosures with card slots, and a hard disk assembly is inserted into a card slot of a corresponding disk enclosure as an FRU, so that mounting of the hard disk on the electronic device can be implemented.

For example, the electronic device provided in this embodiment of the present disclosure may be a server, or may be a terminal. For example, the terminal may be a computer device, a mobile phone, a tablet computer, a television, or a video camera.

An example in which the electronic device is the server is used. The server provided in this embodiment of the present disclosure may be of a 2U specification or a 4U specification. A 2U server has 12 disk enclosures, and a 4U server has 24 disk enclosures. When two hard disks 2 are mounted on each hard disk mounting mechanism 1, the 2U server can accommodate 24 hard disks, the 4U server can accommodate 48 hard disks, and hard disk density of the server is significantly increased, facilitating miniaturization and densification development of the server.

In a possible design, at least one pair of slide rails are disposed on an inner surface of a side wall facing the card slot. The slide rails are configured to guide the hard disk assembly to be inserted into the card slot, and form support for the hard disk assembly after insertion.

In embodiments of the present disclosure, the terms "first" and "second" are used only for purposes of description and are not to be understood as indication or implication of relative importance. Unless otherwise expressly limited, the term "a plurality of" means two or more.

The foregoing descriptions are merely intended to help a person skilled in the art understand the technical solutions of the present disclosure, and are not intended to limit the present disclosure. Any modification, equivalent replacement, or improvement made without departing from the principle of the present disclosure shall fall within the protection scope of the present disclosure.

## Claims

1. A hard disk mounting mechanism, wherein the hard disk mounting mechanism (1) comprises: a support frame (11), a transfer circuit board (12), and a plurality of electrical connector groups (13);
the support frame (11) comprises a first side plate (1101), a panel (1102), and a second side plate (1103) that are perpendicularly connected in sequence, the first side plate (1101), the panel (1102), and the second side plate (1103) cooperate to form an inner cavity of the support frame (11), the inner cavity comprises a plurality of hard disk mounting areas (111), and the hard disk mounting area (111) is used to accommodate a hard disk (2);
the transfer circuit board (12) is disposed in the inner cavity, and is disposed on a side part of the hard disk mounting area (111);
a quantity of the plurality of electrical connector groups (13) is the same as a quantity of the plurality of hard disk mounting areas (111), and each electrical connector group (13) corresponds to one hard disk mounting area (111);
the electrical connector group (13) comprises a first electrical connector (131) and a second electrical connector (132);
one end of the first electrical connector (131) is electrically connected to the transfer circuit board (12), and the other end is configured to be electrically connected to a hard disk (2) accommodated in a corresponding hard disk mounting area (111); and
one end of the second electrical connector (132) is electrically connected to the transfer circuit board (12), and the other end is configured to be electrically connected to an electronic device.

2. The hard disk mounting mechanism according to claim 1, wherein the transfer circuit board (12) comprises: a plurality of first rigid circuit boards (1211), a plurality of second rigid circuit boards (1212), and a plurality of flexible circuit boards (122);
the plurality of first rigid circuit boards (1211) are alternately disposed, starting from a hard disk mounting area (111) farthest away from the panel (1102), between the first side plate (1101) and a corresponding hard disk mounting area (111), and between the second side plate (1103) and a corresponding hard disk mounting area (111);
the second rigid circuit board (1212) is disposed on a side that is of a corresponding hard disk mounting area (111) and that is away from and parallel to the panel (1102); and
the first rigid circuit board (1211) is electrically connected to the second rigid circuit board (1212) by using the flexible circuit board (122).

3. The hard disk mounting mechanism according to claim 1, wherein the transfer circuit board (12) comprises at least one first rigid circuit board (1211), a plurality of second rigid circuit boards (1212), and a plurality of flexible circuit boards (122);
the first rigid circuit board (1211) is disposed between the first side plate (1101) and a corresponding hard disk mounting area (111);
the second rigid circuit board (1212) is disposed on a side that is of a corresponding hard disk mounting area (111) and that is away from and parallel to the panel (1102); and
the first rigid circuit board (1211) is electrically connected to the second rigid circuit board (1212) by using the flexible circuit board (122).

4. The hard disk mounting mechanism according to claim 3, wherein the flexible circuit board (122) comprises a first flexible part (1221) and a second flexible part (1222);
the first flexible part (1221) is disposed between the first rigid circuit board (1211) and the second rigid circuit board (1212);
the second flexible part (1222) is disposed between two adjacent first rigid circuit boards (1211);
each of the first flexible part (1221) and the second flexible part (1222) comprises a first segment and a second segment that are sequentially connected in a direction away from the panel (1102); and
the first segment of the first flexible part (1221) is separated from the first segment of the second flexible part (1222), and the second segment of the first flexible part (1221) is connected to the second segment of the second flexible part (1222).

5. The hard disk mounting mechanism according to claim 2 or 3, wherein the first rigid circuit board (1211), the second rigid circuit board (1212), and the flexible circuit board (122) are vertically disposed relative to a bottom of the inner cavity of the support frame (11).

6. The hard disk mounting mechanism according to claim 5, wherein the first electrical connector (131) is disposed on a first side of the second rigid circuit board (1212), and is configured to be electrically connected to the hard disk (2) in the corresponding hard disk mounting area (111), and the first side is a side that is of the second rigid circuit board (1212) and that faces the corresponding hard disk mounting area (111); and
a plurality of second electrical connectors (132) are disposed on a second side of a second rigid circuit board (1212) farthest away from the panel (1102), and are configured to be electrically connected to a backplane of the electronic device, wherein the second side is a side that is of the second rigid circuit board (1212) farthest away from the panel (1102) and that is away from the corresponding hard disk mounting area (111).

7. The hard disk mounting mechanism according to claim 5, wherein the first electrical connector (131) is disposed on a first side of the second rigid circuit board (1212), and is configured to be electrically connected to the hard disk (2) in the corresponding hard disk mounting area (111), and the first side is a side that is of the second rigid circuit board (1212) and that faces the corresponding hard disk mounting area (111); and
the second electrical connector (132) is an edge connector, and the second electrical connector (132) is disposed at an end of the flexible circuit board (122) farthest away from the panel (1102), and is configured to be electrically connected to a backplane of the electronic device.

8. The hard disk mounting mechanism according to claim 2 or 3, wherein the first rigid circuit board (1211) is fixedly connected to the first side plate (1101) or the second side plate (1103) at a corresponding position.

9. A hard disk assembly, wherein the hard disk assembly comprises the hard disk mounting mechanism (1) according to any one of claims 1 to 8 and a plurality of hard disks (2), and the plurality of hard disks (2) are respectively fastened in a plurality of hard disk mounting areas (111) of the hard disk mounting mechanism (1).

10. An electronic device, wherein the electronic device comprises the hard disk assembly according to claim 9.
